# EUROPEAN PATENT SPECIFICATION

(11) **EP 3 610 162 B1**
(45) Date of publication and mention of the grant of the patent: **14.09.2022**
(21) Application number: 18724990.9
(22) Date of filing: 12.04.2018
(51) Int. Cl.: F16B 21/07

(54) **ANTI-VIBRATION COUPLING SYSTEM FOR A COVER OF AN INTERNAL COMBUSTION ENGINE**
SCHWINGUNGSDÄMPFENDES KOPPLUNGSSYSTEM FÜR EINE ABDECKUNG EINER BRENNKRAFTMASCHINE
SYSTÈME D'ACCOUPLEMENT ANTI-VIBRATION DESTINÉ À UN CAPOT D'UN MOTEUR À COMBUSTION INTERNE

(30) Priority: 13.04.2017 IT 201700041391
(43) Date of publication of application: 19.02.2020
(73) Proprietor: Sapa S.P.A., 20144 Milano (MI) (IT)
(72) Inventor: AFFINITA, Antonio, I-80121 Napoli (NA) (IT)
(74) Representative: Fiammenghi, Eva
(86) International application number: PCT/IB2018/052552
(87) International publication number: WO 2018/189703

(56) References cited:
- EP-A2- 1 925 831
- DE-U1- 20 210 411
- FR-A1- 2 932 235

## Description

### Field of the art

The present invention operates in the field of mechanics and the automobile industry in the sector of plastic components. More in detail the present patent regards a new and innovative system for coupling between any one engine and the relative cover so as to damp the vibrations and reduce the production costs.

### Prior art

The automobile industry is the branch of the manufacturing industry involved with the design, construction, marketing and sales of engine vehicles. After 2008 and 2009, when this was the industrial sector most hit by the economic and financial crisis, such field has since once again found momentum, with a growth greater than 25% in 2010. In 2011 nearly 80 million engine vehicles, which include cars and commercial vehicles, were produced throughout the world, making this the number one manufacturing field in the world for turnover.

This data suffices to explain the great variety of vehicles present on the market today; vehicles ranging from campers to commercial vans, utility vehicles and sports cars. Document DE 202 10 411 U1 discloses a fastening element for vibration-decoupled, in particular for sound-decoupled, connection of two components, e.g. for soundproof connection of a soundproof cover with an engine component of a motor vehicle, with e.g. an essentially circular-cylindrical elastic element which has an essentially spherical recess with an access opening tapering in the shape of a truncated cone from an approximately circular surface-shaped assembly opening to the spherical recess for receiving a spherical section of a first component and is firmly connected on its side opposite the frustoconical access opening to a connecting part having a fastening means for attachment to a second component.

Given the large production numbers of this industrial sector, it is clear that even minimal savings on the production cost of only one component of the vehicle has a significant impact on the overall savings of the production plant.

In the sector of plastic components of vehicles, engine covers have great importance. These are fitted structures that cover and protect the engine of the vehicle, also accomplishing the functions of thermal and acoustic insulation.

Such covers, as already stated, are connected to the relative engine by means of common coupling devices that function in fitted manner and which are the subject of various international patents including the patent EP 0 902 198 B1. More in detail, presently, at the upper surface of the engine, i.e. at the surface intended to be protected by the cover, a plurality of fixing pins are arranged with rounded or spherical head. At the points corresponding to the position of said pins, the cover is provided with deformable elastomeric inserts with shape complementary to the head of the pins.

Such system, which currently substantially represents the manufacturing standard for these coupling devices between an engine and its cover, has critical issues.

First of all, the system currently used is constituted by at least three components: the pin arranged on the engine with the relative coupling system, the elastomeric recess arranged on the cover, produced separately therefrom and connected to said cover by means of its coupling system, and a connection element, also made of an elastomeric polymer, which allows the connection between the two components in an elastic manner. Therefore, there are three devices coupled together, for which particular attention is required to ensure that the performances thereof are compliant with current regulations.

Therefore, the object of the present invention is to propose a new and innovative system for coupling between an engine and its cover which allows the stable and reversible coupling of a cover to the relative engine, which effectively damps the vibrations and which can be made in large series, with a considerable money and times savings.

### Description of the invention

According to the present invention, a coupling system according to claim 1 is provided. A system for coupling between an internal combustion engine and a relative cover is attained. Said coupling system is subjected to numerous safety regulations and quality standards which oblige the maximum possible absorption of the vibrations imparted by the engine to the cover connected thereto. Such absorption is adapted to damp both the movements and the noises coming from the internal combustion engine when it is operating.

Advantageously, with respect to the connection systems currently used in the automobile industry, the present invention allows manufacturing one component less, with respect to the prior art. This involves not only improved performances in terms of vibration absorption, but also considerable money savings in producing the engine cover.

There are advantageously only three components of the coupling system. In particular:
the plastic pin preferably made of polyamide, made by means of molding together with the cover itself and hence integral therewith. In order to prevent phenomena of aesthetic depression, which normally occur on the face of said cover opposite the side where the plastic pins are present, each of said pins can be advantageously provided with a central cavity, with preferably circular section, provided with length slightly smaller than the length of said plastic pin, also covering said head;
- the metal pin, whose proximal end is connected, according to known techniques, to the engine at the position of the plastic pin with which the coupling must occur. Said metal pin is advantageously provided with a threaded body, made of any one metal or metal alloy by means of co-molding and galvanization, and with a first head, also metal, with polygonal section - preferably hexagonal.
- the damping element.

The lateral surface of said damping element is preferably provided also with a second and with a third elasticizing ring, each of which constituted by at least one pair of loops and a projection, circular and suitably sized and positioned on said lateral surface of said damping element in order to increase the flexibility at a pre-established point.

In a preferred version of the present invention, in place of one or more elasticized bands, the entire lateral surface of said damping element is constituted by an alternating sequence of loops and projections, possibly also with size different from each other, adapted to modulate - in a pre-established manner - the flexibility and the elasticity of said damping element for the purpose of attaining total vibration absorption.

The advantages offered by the present invention are evident in light of the description set forth up to now, and will be even clearer due to the enclosed figures and the relative detailed description.

### Description of the figures

The invention will be described hereinbelow in at least one preferred embodiment, by way of a non-limiting example with the aid of the enclosed figures, in which:

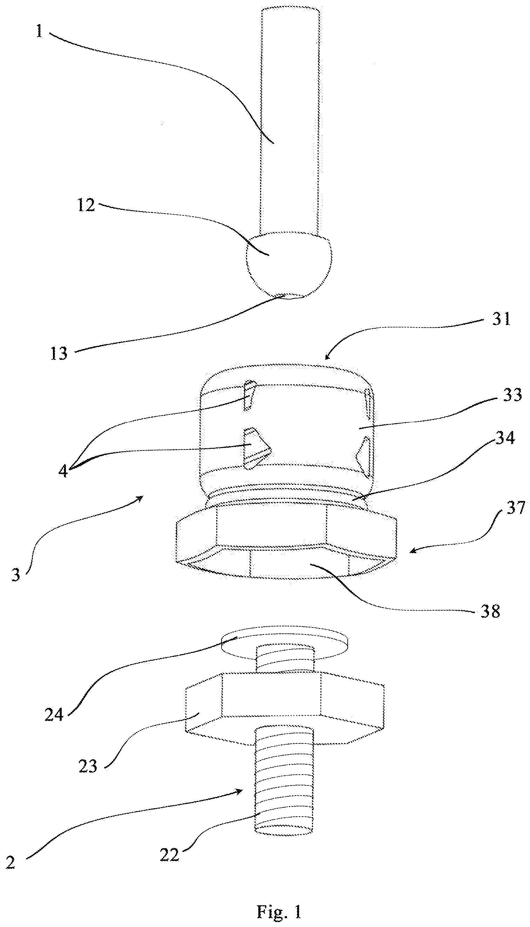

- FIGURE 1 shows a three-dimensional view of components of the present invention One sees the plastic pin 1 provided with its semi-spherical head 12 with the central cavity 13; the damping element 3 with the first inlet end 3 1 at the plastic pin 1, the lateral surface 33 with the through holes 4 and the elasticizing band 34 and the second opposite end 37 with the second recess 38 directed towards the metal pin 2; the latter is represented complete with threads 22, first head 23 and second head 24.

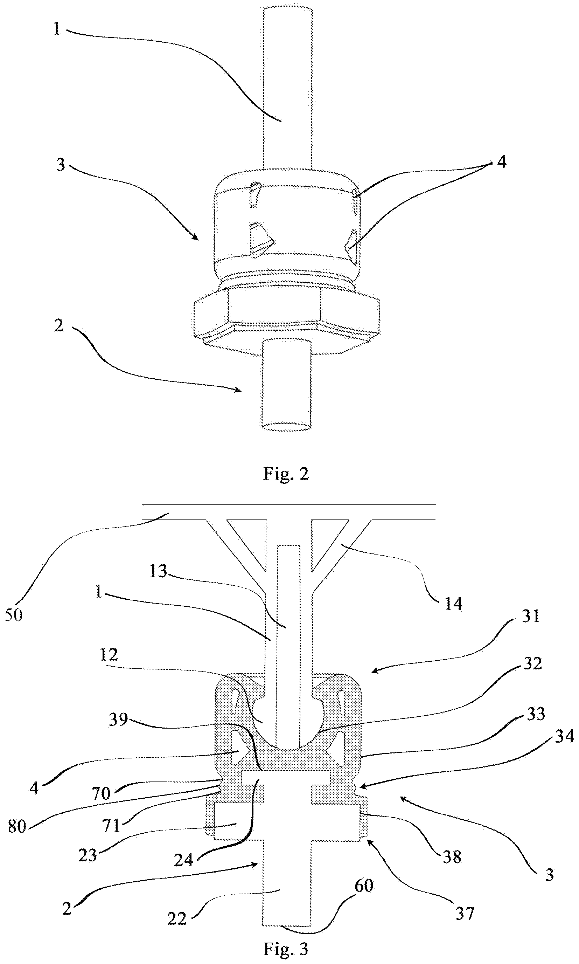

- FIGURE 2 illustrates the system illustrated above in a mounted configuration, in which all three components are coupled together.
- FIGURE 3 shows a longitudinal section of the coupling system in which the engagement of the head 12 of the plastic pin 1 is seen within the first semi-spherical recess 32 of the damping element 3; one sees the engagement of the first head 23 of the metal pin 2 in the corresponding second recess 38 of the damping element 3 of the second head 24 in the corresponding third recess 39 of said damping element 3. Also visible in this figure is the connection between the plastic pin 1 and the relative cover by means of a system of strengthening ribs 14.

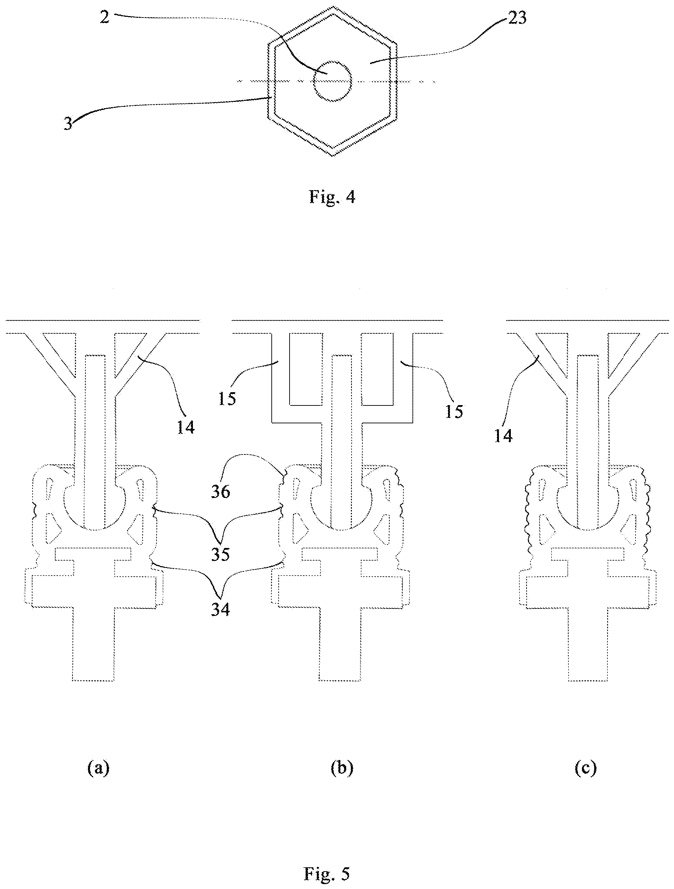

- FIGURE 4 shows a top view of the present system, in which the following can be seen: the metal pin 2, the relative first head 23 and the outer edge of the damping element 3 that encloses it.
- FIGURE 5 shows several of the possible variants of the present invention. In particular FIG. 5(a) shows a version in which, on the lateral surface 33 of the damping element 3, said first elasticizing band 34 is present along with a second elasticizing band 35; FIG. 5(b) illustrates a damping element 3 also provided with a third damping band 36, in this version the ribs 14 are substituted by a hollow reinforcement 15 with substantially parallelepiped shape; FIG. 5(c), finally, shows a particular embodiment in which the entire lateral surface 33 of the damping element 3 is constituted by elasticizing projections and indentations of variable size.

### Detailed description of the invention

The present invention will now be illustrated by way of non-limiting or non-constraining example, making use of the figures which illustrate several embodiments relative to the present inventive concept.

With reference to FIG. 1, a three-dimensional view is shown of all three constituent elements of the coupling system, object of the present invention.

From top to bottom one sees the following:
- the plastic pin 1 with circular section which is made by means of molding together with the cover and which projects therefrom towards the engine. Like the relative cover with which it is integral, such pin will preferably be made of polyamide. At the bottom part of the plastic pin 1, at its distal end, one sees the head 12 with semi-spherical shape that characterizes it;
- the damping element 3, adapted to connect said plastic pin 1 to the relative metal pin 2 described in detail hereinbelow. Said damping element 3 represents the principle area of the innovations claimed by the present patent. The first inlet end 31, i.e. the side of said damping element 3 directed towards said plastic pin 1, is characterized by a first semi-spherical recess 32, suitably configured to be engaged in a stable and reversible manner with said head 12 of said plastic pin 1. The other side, i.e. the second opposite end 37, is directed towards the underlying metal pin 2 and is provided with recesses adapted to establish the stable and reversible connection with said metal pin 2. Still with reference to said FIG.1, a plurality of through holes 4 are visible on the lateral surface 33 of said damping element 3; such through holes 4 are adapted to cross through the body of said damping element 3, along pre-established axes, in order to increase the elasticity thereof and hence the vibration absorption. On said lateral surface 33, a first elasticizing ring 34 is also visible, constituted by at least one pair of loops 70-71 and a projection 80, circular and suitably sized and positioned on said lateral surface 33 in order to increase the flexibility of said damping element 3 at a pre-established point;
- on the lower part of FIG. 1, the third element of the coupling system is visible, i.e. the metal pin 2, whose proximal end 60 is connected to said internal combustion engine at the position of the relative plastic pin 1. This is constituted by a threaded body 22, preferably made by means of co-molding and galvanization. On the upper part thereof, one sees a first head 23, with hexagonal section, and a second head 24. The latter are constituted by mutually coaxial projections adapted to be engaged with corresponding recesses of said damping element 3. Preferably said second head 24 has circular section and has smaller size than said first head 23.

With reference to FIG. 3, one sees a sectional view of the coupling of the present invention. Due to this image, it is possible to comprise the type of constraint existing between the various components. More in detail, one sees the first semi-spherical recess 32 of said damping element 3 which is engaged with the head 12 of said plastic pin 1. At the second opposite end 37 of said damping element 3, instead, one sees the second and the third recess 38 and 39 with which said damping element 3 is provided, which are respectively engaged, in a stable and reversible manner, with said first head 23 and said second head 24 of said metal pin 2.

Still in said FIG. 3, the central cavity 13 is also visible which characterizes said plastic pin 1, from its proximal end to the relative head 12.

Finally, with reference to FIG. 5, several possible variants of the present invention are shown, which especially affect said plastic pin 1 and said damping element 3.

With regard to the stability of the connection between said plastic pin 1 and the relative engine cover, this is provided with a hollow reinforcement structure 15 commonly termed "castle" or alternatively provided with ribs 14 preferably tilted 45° with respect to the longitudinal axis of said plastic pin 1.

The other variants regard the elasticizing rings 34, 35, 36 which cover the lateral surface 33 of the damping element 3. In the version of FIG. 5(a), said damping element is provided with a first elasticizing ring 34 and with a second elasticizing ring 35, respectively placed in proximity to the second opposite end 37 and substantially at half of said lateral surface 33. In FIG. 5(b) a third elasticizing ring 36 is also present, placed in proximity to the first inlet end 31 of said damping element 3.

In FIG. 5(c), instead, the entire lateral surface 33 of the damping element 3 is covered with a plurality of projections and indentations, arranged in a continuous and alternating manner, adapted to increase the elastic behavior of said damping element 3. Possibly, said projections and indentations can have different length and depth, suitably calculated in order to modulate the elastic behavior of said damping element 3 in a pre-established manner.

Finally, it is clear that modifications, additions or variations that are obvious to the man skilled in the art can be made to the invention described up to now, without departing from the protective scope that is provided by the enclosed claims.

## Claims

1. Anti-vibration coupling system for a cover of an internal combustion engine, adapted to allow the stable and reversible engagement of a cover to the respective internal combustion engine, damping any vibration, **characterized in that** it consists of at least:
- a circular section plastic pin (1) adapted to project from the inner surface of said cover, consisting of a thermoplastic polymer adapted to be the same thermoplastic polymer as said cover; said plastic pin (1) being provided with a head (12), having semi-spherical shape or with spherical or pseudo-spherical cap, placed at the distal end of said plastic pin (1), and at least one reinforcement (15), placed at the proximal end of said plastic pin (1), consisting of a hollow stiffening structure, adapted to rigidly but elastically constrain said plastic pin (1) to the respective cover; said reinforcement (15) consisting of ribs (14), preferably tilted by 45° with respect to the longitudinal axis of said plastic pin (1), or consisting of a hollow reinforcement (15) with substantially parallelepiped shape; said plastic pin (1) being preferably provided with a central cavity (13), preferably with circular section, placed at the longitudinal axis of said plastic pin (1) and having a length slightly smaller than the length of said plastic pin (1), from the proximal end thereof up to said head (12); said cavity (13) being adapted to prevent the formation of a depression on the face (50) of said cover opposite said plastic pin (1);
- a metal pin (2) whose proximal end (60) is adapted to be directly connected to said engine, at the position of the respective plastic pin (1), provided with a threaded body (22) and a first head (23), preferably having a polygonal section, consisting of a projection adapted to engage with a corresponding recess of a damping element (3); said metal pin (2) also consisting of a distal end provided with at least one second head (24), having a smaller diameter than said first head (23); said second head (24) preferably having a circular section;
- a damping element (3) adapted to permanently but elastically connect said plastic pin (1) with the corresponding metal pin (2), consisting of any synthetic plastic polymer adapted to absorb the vibrations produced by said internal combustion engine; said damping element (3) being provided with a first inlet end (31) consisting of a first hemispheric recess (32), suitably configured to engage and accommodate, in a stable and reversible manner, the head (12) of the plastic pin (1); said damping element (3) being further provided with a second opposite end (37), consisting of a second recess (38) and a third recess (39), mutually coaxial, adapted to be engaged, in a stable and reversible manner, respectively with said first head (23) and said second head (39) of said metal pin (2); said damping element (3) being provided, on the outer surface (33) thereof, with at least one first elasticizing ring (34), consisting of at least one pair of loops (70-71) and a projection (80), circular and positioned on said lateral surface (33), preferably in the vicinity of said second opposite end (37); said damping element (3) being further provided with a plurality of through holes (4) adapted to cross the entire body of said damping element (3) to increase the elasticity thereof.

2. Anti-vibration coupling system for a cover of an internal combustion engine, according to the preceding claim 1, **characterized in that** the plastic polymer of said cover and said plastic pin (1) is polyamide.

3. Anti-vibration coupling system for a cover of an internal combustion engine, according to any one of the preceding claims 1 or 2, **characterized in that** said metal pin (2) is a common threaded pin, co-molded and subjected to galvanization, made from any metal or metal alloy.

4. Anti-vibration coupling system for a cover of an internal combustion engine, according to any one of the preceding claims, **characterized in that** the lateral surface (33) of the damping element (3) is provided with a second elasticizing ring (35), substantially placed at half distance between said first inlet end (31) and said second opposite end (37).

5. Anti-vibration coupling system for a cover of an internal combustion engine, according to any one of the preceding claims, **characterized in that** the lateral surface (33) of said damping element (3) is provided with a third elasticizing ring (36), placed in proximity to said first inlet end (31).

6. Anti-vibration coupling system for a cover of an internal combustion engine, according to any one of the preceding claims, **characterized in that** the entire lateral surface (33) of said damping element (3) is provided with a plurality of projections and indentations, arranged in a continuous and alternating manner, adapted to increase the elastic behavior of said damping element (3).

7. Anti-vibration coupling system for a cover of an internal combustion engine, according to the preceding claim 6, **characterized in that** said projections and indentations with which said lateral surface (33) of said damping element (3) have different length or depth.

8. Anti-vibration coupling system for a cover of an internal combustion engine, according to any one of the preceding claims, **characterized in that** said second recess (37) of said damping element (3) and said first head (23) of said metal pin (2) have hexagonal or circular shape.

## Patentansprüche

1. Schwingungsdämpfendes Kopplungssystem für eine Abdeckung einer Brennkraftmaschine, das dazu angepasst ist, den stabilen und reversiblen Eingriff einer Abdeckung mit der jeweiligen Brennkraftmaschine zu ermöglichen, wobei jegliche Schwingung gedämpft wird, **dadurch gekennzeichnet, dass** es zumindest besteht aus:
- einem Kunststoffstift (1) mit ringförmigem Querschnitt, der dazu angepasst ist, von der inneren Oberfläche der Abdeckung hervorzuragen und aus einem thermoplastischen Polymer besteht, das dazu angepasst ist, dasselbe thermoplastische Polymer wie die Abdeckung zu sein; wobei der Kunststoffstift (1) mit einem Kopf (12) versehen ist, der eine halbkugelförmige Form oder eine kugelförmige oder pseudosphärische Kappe aufweist und am distalen Ende des Kunststoffstifts (1) angeordnet ist, und zumindest einer Verstärkung (15), die am proximalen Ende des Kunststoffstifts (1) angeordnet ist und aus einer hohlen Versteifungsstruktur besteht, die dazu angepasst ist, den Kunststoffstift (1) starr, aber elastisch an der jeweiligen Abdeckung festzuhalten; wobei die Verstärkung (15) aus Rippen (14) besteht, die vorzugsweise um 45° in Bezug auf die Längsachse des Kunststoffstifts (1) geneigt sind, oder aus einer hohlen Verstärkung (15) mit im Wesentlichen parallelepipedischer Form besteht; wobei der Kunststoffstift (1) vorzugsweise mit einem zentralen Hohlraum (13), vorzugsweise mit ringförmigem Querschnitt, versehen ist, der auf der Längsachse des Kunststoffstifts (1) angeordnet ist und eine Länge aufweist, die etwas geringer ist als die Länge des Kunststoffstifts (1), und zwar vom proximalen Ende desselben bis zu dem Kopf (12); wobei der Hohlraum (13) dazu angepasst ist, die Bildung einer Vertiefung auf der dem Kunststoffstift (1) gegenüberliegenden Fläche (50) der Abdeckung zu verhindern;
- einen Metallstift (2), dessen proximales Ende (60) dazu angepasst ist, an der Position des jeweiligen Kunststoffstifts (1) direkt mit der Maschine verbunden zu werden, und der mit einem Gewindekörper (22) und einem ersten Kopf (23) versehen ist, der vorzugsweise einen polygonalen Querschnitt aufweist und aus einem Vorsprung besteht, der dazu angepasst ist, in eine korrespondierende Aussparung eines Dämpfungselements (3) einzugreifen; wobei der Metallstift (2) außerdem aus einem distalen Ende besteht, das mit zumindest einem zweiten Kopf (24) versehen ist, der einen kleineren Durchmesser als der erste Kopf (23) aufweist; wobei der zweite Kopf (24) vorzugsweise einen ringförmigen Querschnitt aufweist;
- ein Dämpfungselement (3), das dazu angepasst ist, den Kunststoffstift (1) dauerhaft aber elastisch mit dem korrespondierenden Metallstift (2) zu verbinden, und das aus einem beliebigen synthetischen Kunststoffpolymer besteht, das dazu angepasst ist, die durch die Brennkraftmaschine erzeugten Schwingungen zu absorbieren; wobei das Dämpfungselement (3) mit einem ersten Einlassende (31) versehen ist, das aus einer ersten halbkugelförmigen Aussparung (32) besteht, die in geeigneter Weise dazu ausgebildet ist, auf eine stabile und reversible Weise mit dem Kopf (12) des Kunststoffstifts (1) in Eingriff zu kommen und ihn aufzunehmen; wobei das Dämpfungselement (3) ferner mit einem zweiten entgegengesetzten Ende (37) versehen ist, das aus einer zweiten Aussparung (38) und einer dritten Aussparung (39) besteht, die zueinander koaxial sind und dazu angepasst sind, auf eine stabile und reversible Weise mit dem ersten Kopf (23) bzw. dem zweiten Kopf (39) des Metallstifts (2) in Eingriff zu kommen; wobei das Dämpfungselement (3) auf seiner äußeren Oberfläche (33) mit zumindest einem ersten elastifizierenden Ring (34) versehen ist, der aus zumindest einem Paar Ringen (70-71) und einem Vorsprung (80) besteht, der ringförmig ist und auf der seitlichen Oberfläche (33), vorzugsweise in der Nähe des zweiten, entgegengesetzten Endes (37) angeordnet ist; wobei das Dämpfungselement (3) ferner mit mehreren Durchgangslöchern (4) versehen ist, die dazu angepasst sind, den gesamten Körper des Dämpfungselements (3) zu durchqueren, um dessen Elastizität zu erhöhen.

2. Schwingungsdämpfendes Kopplungssystem für eine Abdeckung einer Brennkraftmaschine nach dem vorhergehenden Anspruch 1, **dadurch gekennzeichnet, dass** das Kunststoffpolymer der Abdeckung und des Kunststoffstifts (1) Polyamid ist.

3. Schwingungsdämpfendes Kopplungssystem für eine Abdeckung einer Brennkraftmaschine nach einem der vorhergehenden Ansprüche 1 oder 2, **dadurch gekennzeichnet, dass** der Metallstift (2) ein üblicher, co-geformter und Galvanisierung unterzogener Gewindestift ist, der aus einem beliebigen Metall oder einer beliebigen Metalllegierung besteht.

4. Schwingungsdämpfendes Kopplungssystem für eine Abdeckung einer Brennkraftmaschine nach einem der vorhergehenden Ansprüche, **dadurch gekennzeichnet, dass** die seitliche Oberfläche (33) des Dämpfungselements (3) mit einem zweiten elastischen Ring (35) versehen ist, der im Wesentlichen in halbem Abstand zwischen dem ersten Einlassende (31) und dem zweiten, entgegengesetzten Ende (37) angeordnet ist.

5. Schwingungsdämpfendes Kopplungssystem für eine Abdeckung einer Brennkraftmaschine nach einem der vorhergehenden Ansprüche, **dadurch gekennzeichnet, dass** die seitliche Oberfläche (33) des Dämpfungselements (3) mit einem dritten elastifizierenden Ring (36) versehen ist, der in der Nähe des ersten Einlassendes (31) angeordnet ist.

6. Schwingungsdämpfendes Kopplungssystem für eine Abdeckung einer Brennkraftmaschine nach einem der vorhergehenden Ansprüche, **dadurch gekennzeichnet, dass** die gesamte seitliche Oberfläche (33) des Dämpfungselements (3) mit mehreren Vorsprüngen und Vertiefungen versehen ist, die kontinuierlich und abwechselnd angeordnet und dazu angepasst sind, das elastische Verhalten des Dämpfungselements (3) zu erhöhen.

7. Schwingungsdämpfendes Kopplungssystem für eine Abdeckung einer Brennkraftmaschine nach dem vorhergehenden Anspruch 6, **dadurch gekennzeichnet, dass** die Vorsprünge und Vertiefungen eine unterschiedliche Länge oder Tiefe aufweisen.

8. Schwingungsdämpfendes Kopplungssystem für eine Abdeckung einer Brennkraftmaschine nach einem der vorhergehenden Ansprüche, **dadurch gekennzeichnet, dass** die zweite Aussparung (37) des Dämpfungselements (3) und der erste Kopf (23) des Metallstifts (2) eine hexagonale oder ringförmige Form aufweisen.

## Revendications

1. Système de couplage antivibratoire pour un capot d'un moteur à combustion interne, adapté pour permettre l'engagement stable et réversible d'un capot avec le moteur à combustion interne respectif, amortissant toute vibration, **caractérisé en ce qu'**il consiste en au moins :
- une broche en plastique (1) à section circulaire adaptée pour dépasser de la surface intérieure dudit capot, consistant en un polymère thermoplastique adapté pour être le même polymère thermoplastique que ledit capot ; ladite broche en plastique (1) étant pourvue d'une tête (12), ayant une forme semi-sphérique ou avec une coiffe sphérique ou pseudo-sphérique, placée à l'extrémité distale de ladite broche en plastique (1), et d'au moins un renforcement (15), placé à l'extrémité proximale de ladite broche en plastique (1), consistant en une structure raidisseuse creuse, adaptée pour contraindre rigidement mais élastiquement ladite broche en plastique (1) sur le capot respectif ; ledit renforcement (15) consistant en nervures (14), de préférence inclinées à 45° par rapport à l'axe longitudinal de ladite broche en plastique (1), ou consistant en un renforcement creux (15) de forme sensiblement parallélépipédique ; ladite broche en plastique (1) étant de préférence pourvue d'une cavité centrale (13), de préférence à section circulaire, placée sur l'axe longitudinal de ladite broche en plastique (1) et ayant une longueur légèrement inférieure à la longueur de ladite broche en plastique (1), de l'extrémité proximale de celle-ci jusqu'à ladite tête (12) ; ladite cavité (13) étant adaptée pour empêcher la formation d'une dépression sur la face (50) dudit capot opposée à ladite broche en plastique (1) ;
- une broche en métal (2) dont l'extrémité proximale (60) est adaptée pour être reliée directement audit moteur, à l'emplacement de la broche en plastique (1) respective, et pourvue d'un corps fileté (22) et d'une première tête (23), de préférence ayant une section polygonale, consistant en une saillie adaptée pour s'engager avec un évidement correspondant d'un élément d'amortissement (3) ; ladite broche en métal (2) consistant également en une extrémité distale pourvue d'au moins une deuxième tête (24), ayant un plus petit diamètre que ladite première tête (23) ; ladite deuxième tête (24) ayant de préférence une section circulaire ;
- un élément d'amortissement (3) adapté pour relier en permanence mais élastiquement ladite broche en plastique (1) à ladite broche en métal correspondante (2), consistant en un quelconque polymère plastique de synthèse adapté pour absorber les vibrations produites par ledit moteur à combustion interne ; ledit élément d'amortissement (3) étant pourvu d'une première extrémité d'entrée (31) consistant en un premier évidement hémisphérique (32), configuré de manière appropriée pour engager la tête (12) de la broche en plastique (1) et loger celle-ci, de manière stable et réversible ; ledit élément d'amortissement (3) étant en outre pourvu d'une deuxième extrémité opposée (37), consistant en un deuxième évidement (38) et un troisième évidement (39), mutuellement coaxiaux, adaptés pour être engagés, de manière stable et réversible, respectivement avec ladite première tête (23) et ladite deuxième tête (39) de ladite broche en métal (2) ; ledit élément d'amortissement (3) étant pourvu, sur sa surface extérieure (33), d'au moins une première bague élastique (34), consistant en au moins une paire de boucles (70-71) et une saillie (80), circulaires et positionnées sur ladite surface latérale (33), de préférence à proximité de ladite deuxième extrémité opposée (37) ; ledit élément d'amortissement (3) étant en outre pourvu d'une pluralité de trous traversants (4) adaptés pour traverser tout le corps dudit élément d'amortissement (3) pour accroître l'élasticité de celui-ci.

2. Système de couplage antivibratoire pour un capot d'un moteur à combustion interne, selon la revendication 1 précédente, **caractérisé en ce que** le polymère plastique dudit capot et de ladite broche en plastique (1) est du polyamide.

3. Système de couplage antivibratoire pour un capot d'un moteur à combustion interne, selon l'une quelconque des revendications 1 ou 2 précédentes, **caractérisé en ce que** la broche en métal (2) est une broche filetée commune, co-moulée et soumise à une galvanisation, faite de n'importe quel métal ou alliage de métal.

4. Système de couplage antivibratoire pour un capot d'un moteur à combustion interne, selon l'une quelconque des revendications précédentes, **caractérisé en ce que** la surface latérale (33) de l'élément d'amortissement (3) est pourvue d'une deuxième bague élastique (35), placée sensiblement à mi-distance entre ladite première extrémité d'entrée (31) et ladite deuxième extrémité opposée (37).

5. Système de couplage antivibratoire pour un capot d'un moteur à combustion interne, selon l'une quelconque des revendications précédentes, **caractérisé en ce que** la surface latérale (33) dudit élément d'amortissement (3) est pourvue d'une troisième bague élastique (36), placée à proximité de ladite première extrémité d'entrée (31).

6. Système de couplage antivibratoire pour un capot d'un moteur à combustion interne, selon l'une quelconque des revendications précédentes, **caractérisé en ce que** toute la surface latérale (33) dudit élément d'amortissement (3) est pourvue d'une pluralité de saillies et d'indentations, agencées de manière continue et en alternance, adaptées pour accroître le comportement élastique dudit élément d'amortissement (3).

7. Système de couplage antivibratoire pour un capot d'un moteur à combustion interne, selon la revendication 6 précédente, **caractérisé en ce que** lesdites saillies et indentations dont est pourvue ladite surface latérale (33) dudit élément d'amortissement (3) ont une longueur ou une profondeur différente.

8. Système de couplage antivibratoire pour un capot d'un moteur à combustion interne, selon l'une quelconque des revendications précédentes, **caractérisé en ce que** le deuxième évidement (37) dudit élément d'amortissement (3) et ladite première tête (23) de ladite broche en métal (2) ont une forme hexagonale ou circulaire.
